# EUROPÄISCHE PATENTANMELDUNG

(11) **EP 1 314 633 A1**
(43) Veröffentlichungstag der Anmeldung: **28.05.2003**
(21) Anmeldenummer: 02026244.0
(22) Anmeldetag: 26.11.2002
(51) Int. Cl.: B62D 25/16, B62D 25/18

(54) **Kotflügel für ein lenkbar gehaltenes Rad eines Fahrzeugs**

(30) Priorität: 27.11.2001 DE 20119195 U
(71) Anmelder: Sauermann, Franz, 86558 Freinhausen (DE)
(72) Erfinder: Sauermann, Franz, 86558 Freinhausen (DE)
(74) Vertreter: Leson, Thomas Johannes Alois, Dipl.-Ing.

(57) **Zusammenfassung**

Offenbart wird ein Kotflügel (7) für ein lenkbar gehaltenes Rad (2) eines Fahrzeugs, insbesondere eines Ackerschleppers, wobei der Kotflügel (7) an einem verschwenkbaren Achsschenkel (4) des Rades (2) abgestützt ist, so dass er mit einer Lenkbewegung des Rades (2) verschwenkbar ist. An dem Kotflügel ist radinnenseitig eine sektorförmige, zum Achsschenkel gezogene Schürze (8) angeformt, die Durchbrechungen (9) zur Aufnahme von den Kotflügel höhenverstellbar festlegenden Haltemitteln (10) aufweist.

## Beschreibung

Die Neuerung betrifft einen Kotflügel gemäß dem Oberbegriff des Schutzanspruchs 1.

Aus der Praxis sind Kotflügel bekannt, die zur Abdeckung der gelenkten Vorderräder eines Ackerschleppers dienen. Diese Kotflügel sind unmittelbar auf dem Achsschenkel des betreffenden Rades abgestützt, damit der Kotflügel beim Verschwenken des Rades durch die Lenkung entsprechend mitverschwenkt wird. Insbesondere bei Ackerschleppern muß zur Erzielung eines engen Kurvenradius ein großer Lenkbereich der Vorderräder sichergestellt werden. Würde der Kotflügel starr am Achsschenkel montiert werden, so könnte dieser vor Erreichen des maximalen Lenkeinschlages am Rahmen des Ackerschleppers anstoßen und damit den maximalen Einschlag reduzieren. Aus diesem Grund ist der Kotflügel verschwenkbar am Achsschenkel abgestützt und wird federnd in eine auf das Fahrzeugrad ausgerichtete Lage vorgespannt. Durch einen auf der Fahrzeugachse gehaltenen Anschlag wird gewährleistet, daß der Kotflügel ab einem bestimmten Lenkeinschlag unter Spannung der Feder nicht mehr weiterverschwenkt wird. Damit wird jedoch das Fahrzeugrad bei großen Lenkausschlägen nicht mehr ordnungsgemäß durch den Kotflügel abgedeckt, was zu einer erhöhten Verschmutzung des Ackerschleppers führen kann. Die Abstützung des Kotflügels am Achsschenkel erfolgt durch gesonderte Halteteile in Form von Stangen, die innenseitig den Kotflügel mit dem Achsschenkel verbinden. Dabei hat sich herausgestellt, daß zur Erzielung einer halbwegs schwingungsfreien Kotflügelhalterung die Masse der erforderlichen Halteteile die des Kotflügels um ein Vielfaches übersteigt. Diese Halterung bietet jedoch keinerlei Spritzschutz für das Fahrzeug.

Der Neuerung liegt die Aufgabe zugrunde, einen Kotflügel der eingangs genannten Art mit verbessertem Spritzschutz zu schaffen.

Diese Aufgabe wird neuerungsgemäß mit den Merkmalen der Schutzansprüche 1 bzw. 4 gelöst.

Ein Kotflügel gemäß Anspruch 1 dient zur Abdeckung eines gelenkten Rades eines Fahrzeugs, insbesondere eines Akkerschleppers. Damit der Kotflügel in jeder Lenkstellung des Rades dieses ausreichend abdecken kann, ist der Kotflügel an einem verschwenkbaren Achsschenkel des Rades abgestützt. Damit wird der Kotflügel zwangsweise mit dem Rad verschwenkt, so daß er korrekt auf das Rad ausgerichtet ist. Am Kotflügel ist radinnenseitig eine sektorförmige, zum Achsschenkel gezogene Schürze einstückig angeformt, die zur Festlegung des Kotflügels am Achsschenkel dient. Diese Schürze bildet gleichzeitig einen Spritzschutz für innenseitig vom Fahrzeugrad abgespritzten Schmutz, so daß dieser nicht mehr in den Bereich des Motors des Fahrzeugs kommt. Die nach innen gezogene Schürze weist Durchbrechungen auf, die zur Aufnahme von Haltemitteln dienen. Diese Haltemittel sind vorzugsweise von Schrauben gebildet, mit deren Hilfe der Kotflügel höhenverstellbar mit dem Achsschenkel verbunden werden kann. Eine Höhenverstellbarkeit des Kotflügels ist wichtig, damit der Kotflügel auf unterschiedliche Fahrzeuge bzw. Reifengrößen leicht angepaßt werden kann.

Um eine ausreichende Stabilität des Kotflügels zu gewährleisten, ist dieser bzw. die Schürze als Hohlkörper ausgebildet. Dies ermöglicht es insbesondere, den Kotflügel und die Schürze aus Kunststoff zu erstellen, ohne daß hierbei Probleme mit der Stabilität des Kotflügels entstehen können. Damit kann der Kotflügel samt der Schürze besonders leichtbauend erstellt werden, was sich auch positiv auf die Fertigungskosten auswirkt.

Gemäß Anspruch 3 ist es günstig, wenn die Durchbrechungen der Schürze konzentrisch zum Achsschenkel verlaufen. Damit kann der Kotflügel sehr einfach um den Achsschenkel verschwenkt werden, ohne daß er hierzu von der Halterung abgebaut werden müßte. Dies ist wichtig, da eine Winkelverstellung des Kotflügels beim Wechsel zwischen dem Betrieb auf der Straße und auf dem Acker erforderlich ist. Speziell beim Pflügen, wenn mit einer Reifeneinheit in der gepflügten Spur gefahren wird, ist es vorteilhaft, den Kotflügel nach oben zu drehen, damit mehr Bodenfreiheit besteht, weil anderenfalls durch Bodenkontakt der Kotflügel abreißen könnte oder zumindest Schaden nimmt.

Um zu verhindern, daß der Kotflügel im Bereich der maximalen Lenkausschläge des Rades am Fahrzeugrahmen anschlägt, wird gemäß Anspruch 4 vorgeschlagen, ein Getriebe vorzusehen, welches den Lenkausschlag des Achsschenkels in eine axiale Verschiebung des Kotflügels umformt. Damit kann der Kotflügel über den gesamten Lenkbereich mit dem Achsschenkel verschwenkt werden, so daß der Kotflügel in jeder Lage des Achsschenkels auf das Fahrzeugrad korrekt ausgerichtet ist. Die axiale Verschiebung des Kotflügels ist vorzugsweise so gewählt, daß die Kotflügelinnenkante bei maximalem Lenkausschlag mit der Innenfläche des Rades fluchtet. Auf diese Weise ist auch bei maximalem Lenkausschlag eine ausreichend großflächige Abdeckung des gelenkten Rades durch den Kotflügel gewährleistet, wobei trotzdem ein Anschlagen des Kotflügels am Fahrzeugrahmen zuverlässig verhindert wird.

In einem Bereich um die Neutralstellung des Fahrzeugrades besteht keine Gefahr, daß der Kotflügel gegen den Fahrzeugrahmen stößt. Es reicht daher völlig aus, wenn das Getriebe den Kotflügel gemäß Anspruch 5 nur in einem Bereich zwischen dem maximalen und mindestens halben Lenkausschlag aus seiner Lage in der Neutralstellung axial verschiebt. Auf diese Weise ist gewährleistet, daß der Kotflügel das Fahrzeugrad bei geringen Lenkausschlägen optimal abdeckt und nur bei großen Lenkausschlägen axial verschiebt, um ein Anschlagen des Kotflügel am Fahrzeugrahmen zu verhindern.

Gemäß Anspruch 6 ist es vorteilhaft, wenn das Getriebe den Kotflügel zumindest im Teilbereich proportional zum Lenkausschlag axial verschiebt. Auf diese Weise ergibt sich ein besonders einfacher Aufbau des Getriebes, was insbesondere dessen Störanfälligkeit reduziert.

Um mit einfachen Mitteln sicherzustellen, daß der Kotflügel, unabhängig vom Lenkausschlag bezüglich seines Anstellwinkels, stets korrekt auf das Fahrzeugrad ausgerichtet ist, ist die Ausbildung gemäß Anspruch 8 günstig. Der Kotflügel ist an einem Halteteil festgelegt, welches axial verschiebbar an einer Schiene gehalten ist. Diese Schiene ist am Achsschenkel abgestützt, so daß die Schiene und somit das Halteteil zwangsweise die Schwenkbewegung des Achsschenkels vollführen. Das Halteteil und die Schiene bilden in diesem Fall eine Schiebeführung, die ausschließlich eine axiale Verschiebung des Halteteils und des damit verbundenen Kotflügels erlauben.

Zur Erzielung einer einfachen und gleichzeitig wirkungsvollen Schiebeführung ist es gemäß Anspruch 9 günstig, wenn die Schiene das Halteteil umgreift. Die Schiene bildet in diesem Fall eine Tasche für das Halteteil, so daß das Halteteil ausreichend vor Verschmutzung geschützt ist.

Um die Übertragungsfunktion des Getriebes für unterschiedliche Lenkeinschläge leicht den jeweiligen Erfordernissen anpassen zu können, ist es gemäß Anspruch 10 vorteilhaft, das Getriebe als Kulissengetriebe auszubilden. Dieses Kulissengetriebe weist eine Kulisse auf, in die ein Steuerelement eingreift, welches den Kotflügel in Abhängigkeit vom Schwenkwinkel des Achsschenkels gegenüber der Kulisse axial verstellt. Durch Wahl einer entsprechenden Kulissenform kann jedes beliebige Übertragungsverhalten des Kulissengetriebes leicht eingestellt werden.

Eine bevorzugte Ausführungsform des Kulissengetriebes ergibt sich aus Anspruch 11. Dabei wird die Kulisse von einer in die Halterung eingeformten Nut gebildet, in die ein stationär am Fahrzeug gehaltener Stift eingreift. Vorzugsweise wird der Stift an der Achse des Fahrzeugs abgestützt, wodurch sich ein einfacher und kompakter Aufbau des Getriebes ergibt. Während der Stift stationär am Fahrzeug gehalten ist, wird die Schiene zusammen mit der Halterung mit dem Achsschenkel entsprechend der Lenkbewegung verschwenkt. Die Halterung mit der Kulisse führt daher relativ zum Stift eine Schwenkbewegung aus. Durch unterschiedliche radiale Abstände der einzelnen Kulissenpunkte vom Schwenklager des Achsschenkels ergibt sich die gewünschte axiale Verschiebung der mit der Kulisse versehenen Halterung. Da die Nut den Stift von zwei einander gegenüberliegenden Seiten her führt, ergibt sich ohne weitere Maßnahmen eine Zwangsverstellung der Halterung und damit des Kotflügels, so daß auf zusätzliche Federn oder dergleichen verzichtet werden kann.

Um zu verhindern, daß bei auftretenden Vibrationen am Fahrzeug der Stift aus der Nut herausspringt, ist es gemäß Anspruch 12 günstig, die Nut hinterschnitten auszubilden. Vorzugsweise besitzt die Nut einen T-förmigen Querschnitt, so daß der Stift in die Nut ausreichend sicher eingreifen kann, so daß ein Herausspringen des Stiftes unmöglich wird.

Alternativ ist es gemäß Anspruch 13 vorteilhaft, wenn das Kulissengetriebe eine Gleitfläche der Halterung aufweist. In diesem Fall wird die Halterung federnd gegen ein stationär am Fahrzeug abgestütztes Teil vorgespannt, so daß sich eine sichere Abtastung der Gleitfläche ergibt. Diese Ausbildung des Kulissengetriebes ist konstruktiv besonders einfach, da die Kulisse nur von einer einzigen Gleitfläche gebildet ist. Außerdem kann das stationär am Fahrzeug abgestützte Teil hinreichend lang ausgebildet sein, so daß es in allen Betriebslagen sicher gegen die Gleitfläche der Halterung drückt. Außerdem ist selbst bei starker Verschmutzung der Halterung eine klemmfreie Funktion gewährleistet, was sich günstig auf den Betrieb auswirkt.

Der Neuerungsgegenstand wird beispielhaft anhand der Zeichnung erläutert, ohne den Schutzumfang zu beschränken.

Es zeigt:
- Figur 1: eine räumliche Darstellung eines gelenkten Fahrzeugrades mit einem Kotflügel,
- Figur 2: eine Ansicht des Kotflügels in axialer Richtung zum Achsschenkel,
- Figur 3: eine Schnittdarstellung durch den Kotflügel entlang der Schnittlinie III-III gemäß Figur 2,
- Figur 4: eine Schnittdarstellung durch eine erste Ausführungsform des Getriebes entlang der Schnittlinie IV-IV gemäß Figur 1 und
- Figur 5: eine Schnittdarstellung gemäß Figur 4 einer alternativen Ausführungsform des Getriebes.

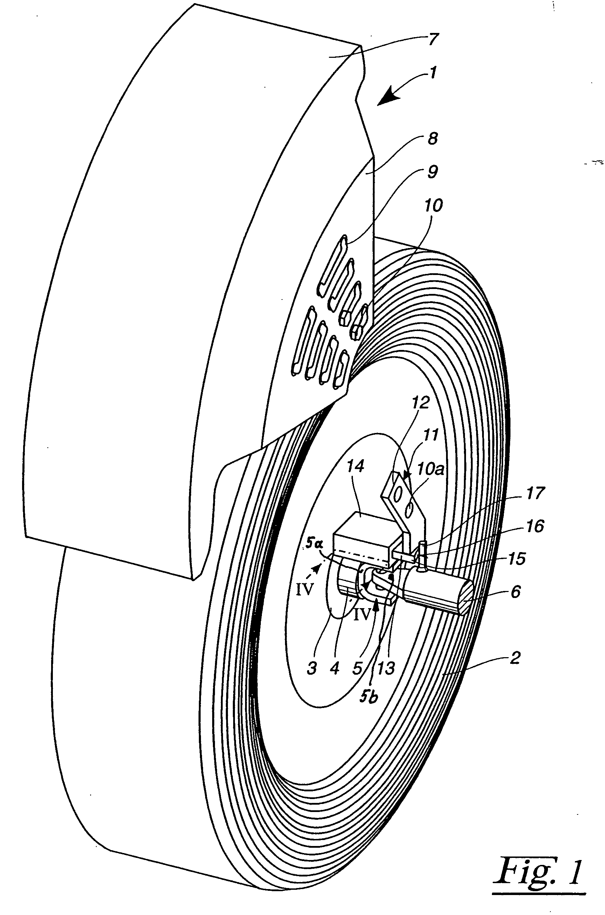

Figur 1 zeigt eine räumliche Darstellung eines Ausschnitts eines Fahrzeugs 1, insbesondere eines Ackerschleppers mit einem gelenkten Rad 2. Das Rad 2 ist über ein Radlager 3 auf einem Achsschenkel 4 drehbar gelagert. Es spielt dabei keine Rolle, ob das Rad 2 frei drehbar gehalten oder angetrieben ist. Der Achsschenkel 4 ist über ein Gelenk 5 mit seinen Gelenkteilen 5a, 5b an einer Achse 6 gehalten, die stationär im Fahrzeug 1 abgestützt ist.

Zum Schutz des Fahrzeugs 1 vor vom Rad 2 abspritzenden Schmutz ist dieses im oberen Bereich von einem Kotflügel 7 teilweise abgedeckt, der vertikal nach oben verschoben dargestellt ist. Am Kotflügel 7 ist radinnenseitig eine sektorförmige Schürze 8 bis nahe zum Achsschenkel 4 gezogen. Diese Schürze 8 dient einerseits als Spritzschutz für das Fahrzeug 1 und andererseits zum einfachen Festlegen des Kotflügels 7. Der Kotflügel 7 ist zusammen mit der Schürze 8 einstückig aus Kunststoff erstellt, um die Herstellungskosten und dessen Gewicht klein zu halten. An der Schürze 8 sind eine Reihe von Durchbrechungen 9 vorgesehen, die zur Aufnahme von Haltemitteln 10 in Form von Schrauben dienen. In Abhängigkeit von der gewählten Durchbrechung 9 für die Festlegung mit den Haltemitteln 10 wird der Kotflügel 7 am Achsschenkel 4 höhen- und/oder winkelverstellbar ausgerichtet.

Durch die Haltemittel 10 wird der Kotflügel 7 an einer Halterung 11 festgelegt, die bevorzugt aus Kunststoff erstellt ist. Diese Halterung 11 weist einen Haltesteg 12 auf, der mit Bohrungen 10a zur Aufnahme der Haltemittel 10 versehen ist. Der Haltesteg 12 besitzt einen abgeknickten Verlauf, damit dessen Lage optimal an die erforderliche Ausrichtung des Kotflügels 7 zum Fahrzeugrad 2 angepaßt ist. Es wäre auch eine gerade oder anders geformte Ausbildung des Stegs 12 denkbar, was schließlich von den Platzbedingungen abhängig ist. Für die Befestigung wäre auch eine Dreipunktlagerung möglich, wobei das dritte Haltemittel 10 vorzugsweise an die nebengeordnete Durchbrechung 9 greifen würde.

Die Halterung 11 weist außerdem eine Gleitplatte 13 auf, die in einer Führungsbox 14 axial zum Achsschenkel 4 verschiebbar geführt ist. Diese Führungsbox 14 ist auf dem Gelenkteil 5a des Achsschenkel 4 drehfest festgelegt, so daß die Führungsbox 14 stets parallel zum Achsschenkel 4 ausgerichtet ist. Damit ist der Kotflügel 7 im gesamten Lenkbereich des Rades 2 korrekt auf dieses Rad 2 ausgerichtet. Die Führungsbox 14 umfaßt die Gleitplatte 13 von fünf Seiten, wodurch sich eine exakte Führungswirkung und gleichzeitig ein Schutz der Gleitplatte 13 vor Verschmutzung ergibt. In der Führungsbox 14 sind Federn 30 eingelagert, auf die später noch eingegangen wird, die die Halterung 11 axial zur Achse 6 hin vorspannen. Als Alternative könnte die Gleitplatte 13 übergreifend auf der Führungsbox 14 gelagert sein.

In axialer Verlängerung der Gleitplatte 13 weist die Halterung 11 einen Vorsprung 15 auf, der mit einer Gleitfläche 16 versehen ist. Diese Gleitfläche 16 bildet eine Kulisse, die von einem stationär auf der Achse 6 abgestützten Stift 17 abgetastet wird. Diese Gleitfläche 16 ist derart ausgebildet, daß die Halterung 11 zusammen mit dem Kotflügel 7 im Bereich des maximalen Lenkausschlages des Rades 2 axial nach außen verschoben wird. Damit wird verhindert, daß beim starken Einschlagen des Rades der Kotflügel 7 gegen einen nicht dargestellten Rahmen des Fahrzeugs 1 stößt.

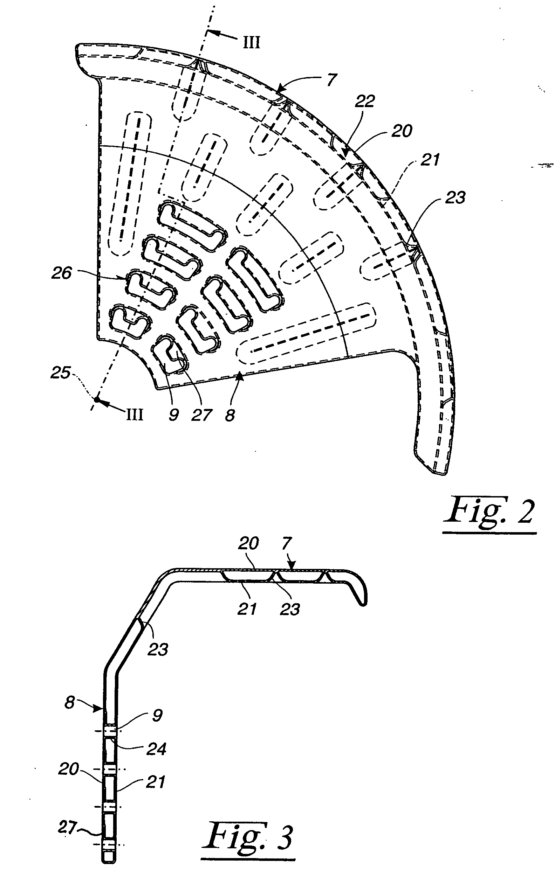

Der Aufbau des Kotflügels 7 wird anhand der zugeordneten Darstellungen gemäß den Figuren 2 und 3 näher erläutert. Der Kotflügel 7 besitzt eine an die Radkrümmung angepaßte Außenwandung 20, die sich in der Darstellung über etwas mehr als 90° des Radumfangs erstreckt. Es wäre auch denkbar, die Abdeckung weniger als 90° umfassen zu lassen, wenn das Gelände geringere Verschmutzung erbringt. Zur Erhöhung der Stabilität des Kotflügels 7 ist der Außenwandung 20 eine Innenwandung 21 zugeordnet, die zusammen einen Hohlraum 22 einschließen. An mehreren Stellen des Kotflügels ist die Innenwandung 21 unter Bildung von Versteifungsrippen 23 zur Außenwandung 20 gezogen, um dem Kotflügel 7 eine ausreichend hohe Steifigkeit zu verleihen. Die Schürze 8 ist in gleicher Weise wie der Kotflügel 7 mit Außen- 20 und Innenwandung 21 aufgebaut und mit diesem einstückig verbunden. Auch an der Schürze 8 ist die Innenwandung 21 unter Bildung von Versteifungsrippen 23 zur Außenwandung 20 gezogen, um dieser eine ausreichend hohe Stabilität zu gewähren.

An der Schürze 8 sind die Durchbrechungen 9 zur Aufnahme der Haltemittel 10 vorgesehen, die sowohl die Außenwandung 20 als auch die Innenwandung 21 durchsetzen. Die Durchbrechungen 9 sind gegenüber dem Hohlraum 22 durch Wandungen 24 abgeschlossen, die zur Führung der Haltemittel 10 dienen. Die Durchbrechungen 9 verlaufen im wesentlichen konzentrisch zu einer Drehachse 25 des Rades 2, wobei sie an den beiden Enden 26 nach oben gezogen sind. Durch diese besondere Form der Durchbrechungen 9 kann der Kotflügel 7 sehr leicht in seiner Winkellage verstellt werden, was beispielsweise zum Umstellen des Kotflügels 7 vom Straßenbetrieb auf Ackerbetrieb erforderlich ist. Durch das nach oben gezogene Ende 26 der Durchbrechungen 9 kann der Kotflügel sehr leicht in der jeweiligen Endlage arretiert werden, was das Festlegen der Haltemittel 10 erleichtert. Im Bereich der Enden 26 der Durchbrechungen 9 sind an der vom Rad 2 abgewandten Außenwandung 20 der Schürze 8 Vertiefungen 27 zur Aufnahme von Scheiben eingeformt. Diese nicht dargestellten Scheiben dienen zur Erzielung einer günstigen Druckverteilung der Haltemittel 10 auf die Außenwandung 20. Aber gleichzeitig wird mit diesen Scheiben in den Vertiefungen 27 auch eine formschlüssige Befestigung des Kotflügels erreicht.

Eine Anzahl von Durchbrechungen 9 ist an der Schürze in unterschiedlichem Radialabstand von der Drehachse 25 des Rades 2 angeordnet. Damit kann der Kotflügel 7 in unterschiedlichen Höhenlagen an der Halterung 11 montiert werden, so daß der Kotflügel 7 für verschiedenste Fahrzeuge 1 und Reifengrößen einsetzbar ist. In Umfangsrichtung sind jeweils zwei Durchbrechungen 9 nebeneinander angeordnet. Die Festlegung des Kotflügels 7 erfolgt mit wenigstens zwei Haltemitteln 10, die die Durchbrechungen 9 durchsetzen. Damit ist ein selbständiges Verdrehen des Kotflügels 7 gegenüber der Halterung 11 zuverlässig ausgeschlossen.

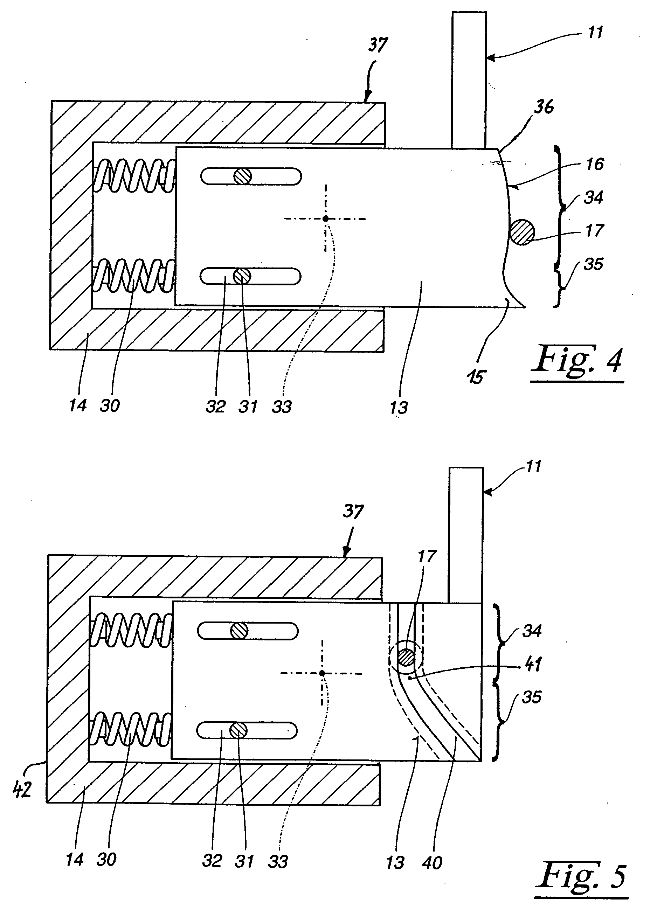

Figur 4 zeigt eine Schnittdarstellung einer bevorzugten Ausführungsform der Halterung 11 entlang der Schnittlinie IV-IV gemäß Figur 1. Die Gleitplatte 13 der Halterung 11 ist in der Führungsbox 14 axial verschiebbar geführt, die die Gleitplatte 13 von vier Seiten eng umschließt und rückseitig abschließt. In der Führungsbox 14 sind Federn 30 vorgesehen, die sich an der Rückseite 42 der Führungsbox 14 abstützen und die Gleitplatte 13 gegen den Stift 17 vorspannen. Zur Begrenzung des Schiebeweges der Gleitplatte 13 sind in dieser Langlöcher 32 vorgesehen, in die Begrenzungsstifte 31 eingreifen, welche in der Führungsbox 14 stationär gehalten sind. Damit ist der axiale Schiebeweg der Gleitplatte 13 begrenzt, so daß diese nicht vollständig aus der Führungsbox 14 herausgezogen werden kann. Dies erleichtert die Montage der Führungsbox 14 am Gelenk 5 des Fahrzeugs 1.

Der axiale Vorsprung 15 der Halterung 11 wird aufgrund der Kraft der Federn 30 gegen den stationär an der Achse 6 festgelegten als Stift ausgebildeten Widerstand 17 gedrückt. Durch Betätigung der Lenkung des Fahrzeugs 1 wird die Führungsbox 14 zusammen mit der Halterung 11 um eine Schwenkachse 33, die der Schwenkachse des Gelenks 5 entspricht, verschwenkt. Dabei gleitet der stationär gehaltene Widerstand bzw. Stift 17 entlang der Gleitfläche 16 des axialen Vorsprungs 15 der Halterung 11, die auf diese Weise durch den Widerstand 17 abgetastet wird. Ausgehend von der in Figur 4 dargestellten Neutralstellung der Lenkung verläuft die Gleitfläche 16 einseitig in einem inaktiven Bereich 34 konzentrisch zur Schwenkachse 33, so daß die Gleitplatte und damit die Halterung 11 in diesem Schwenkbereich keinerlei axiale Verschiebung gegenüber der Führungsbox 14 erfährt. Die Halterung 11 wird dabei derart montiert, daß der genannte inaktive Bereich 34 der Gleitfläche 16 beim linken Rad 2 bei einer Einlenkung nach rechts und beim rechten Rad bei einer Einlenkung nach links zum Tragen kommt. In diesem Fall wird das hintere bzw. untere Ende des Kotflügels 7 vom Fahrzeugrahmen weg verschwenkt, so daß ein Anstoßen des Kotflügels 7 am Fahrzeugrahmen von vornherein ausgeschlossen ist. Daher ist eine axiale Verschiebung des Kotflügels 7 in den genannten Betriebsfällen nicht erforderlich.

Gleiches gilt auch bei jeweils umgekehrten Lenkeinschlägen, sofern diese nicht allzu groß sind. Aus diesem Grund erstreckt sich der genannte inaktive Bereich 34 der Gleitfläche 16 von dessen Ende 36 bis etwa zum halben Lenkausschlag in die Gegenrichtung. An diesen inaktiven Bereich 34 der Gleitfläche 16 schließt sich ein aktiver Bereich 35 an, in den die Gleitfläche 16 vom konzentrisch zur Schwenkachse 33 liegenden Verlauf abweicht. In diesem aktiven Bereich 35 der Gleitfläche 16 wird die Schwenkbewegung der Führungsbox 14 in eine axiale Schubbewegung der Gleitplatte 13 und damit der Halterung 11 umgeformt, so daß die Gleitfläche 16 zusammen mit dem abtastenden Widerstand bzw. Stift 17 eine Verstelleinheit 37 bildet. In diesem Bereich wird die Halterung 11 und somit der Kotflügel 7 einerseits mit dem Achsschenkel 4 verschwenkt und andererseits auch axial nach außen verschoben. Dies verhindert ein Anschlagen des Kotflügels 7 am Fahrzeugrahmen.

Figur 5 zeigt ein alternatives Ausführungsbeispiel der Halterung 11, wobei gleiche Bezugszeichen gleiche Teile benennen. Bei diesem Ausführungsbeispiel weist die Gleitplatte 13 eine hinterschnittene, T-förmige Nut 40 auf, in die der als Widerstand 17 ausgebildete Stift eingreift. Diese Nut 40 bildet für den Stift 17 eine Kulisse, so daß die Halterung 11 bei einer Verschwenkung der Führungsbox 14 um die Schwenkachse 33 durch den Stift 17 zwangsgeführt ist. Damit kann auf den Einsatz zusätzlicher Federn 30 verzichtet werden. Der Stift 17 könnte mit einer Gleithülse überzogen sein.

Im Unterschied zum Ausführungsbeispiel gemäß Figur 4 verläuft die Nut 40 im oben Bereich, dem sogenannten inaktiven Bereich 34, quer zur Verschieberichtung der Halterung 11, so daß sich beim Verschwenken der Führungsbox 14 eine geringfügige, in der Praxis jedoch vernachlässigbare axiale Verschiebung des Kotflügels 7 ergibt. Im übrigen Bereich 35 verläuft die Nut 40 in einem spitzen Winkel zur Verschieberichtung, so daß sich bei einer Verschwenkung der Führungsbox 14 in diesen Bereich eine entsprechende axiale Verschiebung der Halterung 11 und damit des Kotflügels 7 ergibt. Dieser Bereich der Nut 40 ergibt somit den aktiven Bereich 35. Zwischen dem inaktiven Bereich 34 und dem aktiven Bereich 35 weist die Nut einen gerundeten Übergangsbereich 41 auf, der ein Verkanten des Stiftes 17 verhindert.
Offenbart wird ein Kotflügel für ein lenkbar gehaltenes Rad eines Fahrzeugs, insbesondere eines Ackerschleppers, wobei der Kotflügel an einem verschwenkbaren Achsschenkel des Rades abgestützt ist, so dass er mit einer Lenkbewegung des Rades verschwenkbar ist. An dem Kotflügel ist radinnenseitig eine sektorförmige, zum Achsschenkel gezogene Schürze angeformt, die Durchbrechungen zur Aufnahme von den Kotflügel höhenverstellbar festlegenden Haltemitteln aufweist.

### Bezugszeichenliste

- 1: Fahrzeug
- 2: Rad
- 3: Radlager
- 4: Achsschenkel
- 5: Gelenk
- 6: Achse
- 7: Kotflügel
- 8: Schürze
- 9: Durchbrechung
- 10: Haltemittel
- 10a: Bohrungen
- 11: Halterung
- 12: Haltesteg
- 13: Gleitplatte
- 14: Führungsbox
- 15: axialer Vorsprung
- 16: Gleitfläche
- 17: Widerstand (Stift)
- 20: Außenwandung
- 21: Innenwandung
- 22: Hohlraum
- 23: Versteifungsrippe
- 24: Wandung
- 25: Drehachse
- 26: Ende der Durchbrechung
- 27: Vertiefung
- 30: Feder
- 31: Begrenzungsstift
- 32: Langloch
- 33: Schwenkachse
- 34: inaktiver Bereich
- 35: aktiver Bereich
- 36: Ende der Gleitfläche
- 37: Verstelleinheit
- 40: Nut
- 41: Übergangsbereich
- 42: Rückseite

## Patentansprüche

1. Kotflügel für ein lenkbar gehaltenes Rad (2) eines Fahrzeugs (1), insbesondere eines Ackerschleppers, wobei der Kotflügel (7) an einem verschwenkbaren Achsschenkel (4) des Rades (2) abgestützt ist, so daß er mit einer Lenkbewegung des Rades (2) verschwenkbar ist, **dadurch gekennzeichnet, daß** am Kotflügel (7) radinnenseitig eine sektorförmige, zum Achsschenkel (4) gezogene Schürze (8) einstückig angeformt ist, die Durchbrechungen (9) zur Aufnahme von den Kotflügel (7) höhenverstellbar festlegenden Haltemitteln (10) aufweist.

2. Kotflügel nach Anspruch 1, **dadurch gekennzeichnet, daß** der Kotflügel (7) und/oder die Schürze (8) als Hohlkörper ausgebildet ist/sind.

3. Kotflügel nach Anspruch 1 oder 2, **dadurch gekennzeichnet, daß** die Durchbrechungen (9) der Schürze (8) sowohl übereinander wie nebeneinander angeordnet sind und dabei konzentrisch zum Achsschenkel (4) verlaufen.

4. Kotflügel nach mindestens einem der Ansprüche 1 bis 3 oder nach dem Oberbegriff des Anspruchs 1, **dadurch gekennzeichnet, daß** der Kotflügel (7) über den gesamten Schwenkbereich des Rades (2) mit diesem verschwenkbar ist und mit einer den Lenkausschlag des Achsschenkels (4) in eine axiale Verschiebung des Kotflügels (7) umformenden Verstelleinheit (37) in Wirkverbindung steht.

5. Kotflügel nach Anspruch 4, **dadurch gekennzeichnet, daß** die Verstelleinheit (37) den Kotflügel (7) nur in einem aktiven Bereich (35) zwischen dem maximalen und einem mindestens halben Lenkausschlag aus seiner Lage in Neutralstellung zum Rad (2) axial verschiebt.

6. Kotflügel nach Anspruch 4 oder 5, **dadurch gekennzeichnet, daß** die Verstelleinheit (37) den Kotflügel (7) zumindest in einem Teil (35) des Lenkbereichs in etwa proportional zum Lenkausschlag axial verschiebt.

7. Kotflügel nach mindestens einem der Ansprüche 4 bis 6, **dadurch gekennzeichnet, daß** die Verstelleinheit (37) den Lenkeinschlag des Rades (2) nicht linear in eine axiale Verschiebung des Kotflügels (7) umformt.

8. Kotflügel nach mindestens einem der Ansprüche 4 bis 7, **dadurch gekennzeichnet, daß** der Kotflügel (7) an einem Halteteil (11) festgelegt ist, welches an einer axial in einer Führungsbox (14) verschiebbaren Gleitplatte (13) gehalten ist, die mit dem Achsschenkel (4) drehfest verbunden ist.

9. Kotflügel nach Anspruch 8, **dadurch gekennzeichnet, daß** die Führungsbox (14) die Gleitplatte (13) umgreift.

10. Kotflügel nach mindestens einem der Ansprüche 4 bis 7, **dadurch gekennzeichnet, daß** die Verstelleinheit (37) eine Kulissenführung aufweist.

11. Kotflügel nach Anspruch 10, **dadurch gekennzeichnet, daß** die Kulissenführung von einer in die Gleitplatte (13) eingeformten Nut (40) gebildet ist, in die ein stationär am Fahrzeug (1) gehaltener, als Stift ausgebildeter Widerstand (17) eingreift.

12. Kotflügel nach Anspruch 11, **dadurch gekennzeichnet, daß** die Nut (40) hinterschnitten ist.

13. Kotflügel nach Anspruch 10, **dadurch gekennzeichnet, daß** die Gleitplatte (13) der Verstelleinheit (37) frontal mit einer Gleitfläche (16) ausgestattet ist, die federnd gegen einen stationär am Fahrzeug (1) abgestützten Widerstand (17) vorgespannt ist und beide gleitend zusammenwirken.
